# EUROPEAN PATENT APPLICATION

(11) **EP 4 276 584 A2**
(43) Date of publication of application: **15.11.2023**
(21) Application number: 23185738.4
(22) Date of filing: 25.01.2018
(51) Int. Cl.: G06F 1/3203

(54) **CONTENT-AWARE ENERGY SAVINGS FOR WEB BROWSING UTILIZING SELECTIVE LOADING PRIORITY**

(30) Priority: 02.02.2017 US 201715423542
(62) Divisional of application: 21194744.5
(71) Applicant: Huawei Technologies Co., Ltd., Shenzhen, Guangdong 518129 (CN)
(72) Inventor: LIN, Zongfang, SHENZHEN, 518129 (CN); WANG, Jun, SHENZHEN, 518129 (CN); TIAN, Chen, SHENZHEN, 518129 (CN); YE, Handong, SHENZHEN, 518129 (CN); HU, Ziang, SHENZHEN, 518129 (CN)
(74) Representative: Körber, Martin Hans

(57) **Abstract**

A mobile device, computer readable medium, and method are provided for web browsing that reduces a power consumption of the mobile device. The method includes the steps of receiving a markup language document that includes a plurality of elements; assigning each element in the plurality of elements a priority value according to a set of rules; and selectively loading rendered content corresponding to the plurality of elements into a window of an application executed by the mobile device based on the priority value assigned to each element in the plurality of elements. The set of rules includes at least two rules configured to assign two or more priority values to at least two subsets of elements in the plurality of elements. Selective loading may refer to loading elements of a web page in a different order compared to a default order of a rendering engine of the web browser.

## Description

### FIELD OF THE INVENTION

The present invention relates to energy efficiency, and more particularly to power saving methods associated with web browsing.

### BACKGROUND

The battery capacity of mobile devices such as tablet computers and smart phones is extremely important to the consumer's satisfaction with the device. A single charge of a battery needs to last 6-8 hours, or more, in order for the consumer to use the device while on the go. Each manufacturer of these devices has poured significant resources into implementing techniques to reduce the power consumption of the device in order to extend the life of the battery during operation. Separate power management chips may be used to power gate certain components of the device. In addition, software solutions have been implemented to reduce the power consumption of the device, such as by reducing the number of active threads in a low-power mode or reducing the brightness of a display.

Mobile devices are used today in a variety of ways, but one of the typical applications being used on these devices is a web browsing application. These applications request markup language documents from a server, parse the markup language document, and then render the elements included in the markup language document to a window displayed by the mobile device. Power is consumed by downloading large files, such as image and video files, over a wireless connection using a radio transceiver; rendering text, images, or video data to produce pixel data for display; and updating the display using the pixel data. Users of the mobile devices may browse the Internet using the web browsing applications for hours during the day, which may drain the battery of the device at an alarming rate and potentially render the device inoperable before they can get to a location to charge the device. Thus, there is a need for addressing this issue and/or other issues associated with the prior art.

### SUMMARY

A mobile device, computer readable medium, and method are provided for web browsing that reduces a power consumption of the mobile device. The method includes the steps of receiving a markup language document that includes a plurality of elements; assigning each element in the plurality of elements a priority value based on a set of rules; and selectively loading rendered content corresponding to the plurality of elements into a window of an application executed by the mobile device according to the priority value assigned to each element in the plurality of elements. The set of rules includes at least two rules configured to assign two or more priority values to at least two subsets of elements in the plurality of elements. Selective loading may refer to loading elements of a web page in a different order compared to a default order of a rendering engine of the web browser.

In a first embodiment, the set of rules includes at least one rule that assigns the priority value to a particular element based on a classification of the particular element. The classification may be an element type identified by tags in the markup language document, an attribute value, and/or content within the element.

In a second embodiment (which may or may not be combined with the first embodiment), the set of rules includes at least one rule that assigns the priority value to a particular element based on whether the particular element is identified as advertising content. Advertising content may be identified in a number of ways and may include, but is not limited to, elements in a markup language document such as text, images, and hyperlinks as well as video content that includes sequences of frames identified as commercials.

In a third embodiment (which may or may not be combined with the first and/or second embodiments), the set of rules is selected based on a uniform resource locator (URL) corresponding to the markup language document. The URL may be utilized to fetch the set of rules from a server that provides a rules service.

In a fourth embodiment (which may or may not be combined with the first, second, and/or third embodiments), selectively loading rendered content corresponding to the plurality of elements into the window of the application includes the steps of: determining an order of elements based on the priority value assigned to each element in the plurality of elements; and displaying, in the order of elements, rendered content corresponding to each element in the plurality of elements. The display of a next element in the order of elements is delayed for a predetermined delay time after displaying a previous element in the order of elements.

In a fifth embodiment (which may or may not be combined with the first, second, third, and/or fourth embodiments), the elements associated with priority values in a first range of priority values are loaded into the window while operating the mobile device in a normal mode and elements associated with priority values in a second range of priority values are loaded into the window while operating the mobile device in a low-power mode.

In a sixth embodiment (which may or may not be combined with the first, second, third, fourth, and/or fifth embodiments), operating the mobile device in the low-power mode comprises at least one of reducing a supply voltage or a frequency of a processor in the mobile device using Dynamic Voltage and Frequency Scaling (DVFS), reducing a resolution of the rendered content corresponding to the element, reducing a brightness level of the display device, throttling one or more threads associated with low priority elements within the markup language document, or masking low priority elements within the window of the application.

In a seventh embodiment (which may or may not be combined with the first, second, third, fourth, fifth, and/or sixth embodiments), one or more elements in the plurality of elements is associated with a graphical user interface element displayed in the window of the application that enables a user to manually load the rendered content associated with corresponding elements into the window of the application.

To this end, in some optional embodiments, one or more of the foregoing features of the aforementioned apparatus, system, and/or method may afford a more efficient way to browse the web that, in turn, may enable the power consumption of a mobile device to be reduced while being utilized for web browsing. It should be noted that the aforementioned potential advantages are set forth for illustrative purposes only and should not be construed as limiting in any manner.

### BRIEF DESCRIPTION OF THE DRAWINGS

Figure **1** illustrates a mobile device, in accordance with one embodiment;
Figure **2** illustrates a software environment of the mobile device, in accordance with one embodiment;
Figures **3A** through **3C** illustrate websites displayed by a mobile device, in accordance with one embodiment;
Figure **4A** illustrates a priority assigned to elements of a markup language document **400,** in accordance with one embodiment;
Figure **4B** illustrates a system for generating a modified markup language document based on a set of rules, in accordance with one embodiment;
Figures **5A** through **5D** illustrate selective loading of rendered content for a plurality of elements in a markup language document, in accordance with one embodiment;
Figure **6** illustrates a system for serving sets of rules to multiple clients, in accordance with one embodiment;
Figure **7A** is a flowchart of a method for reducing the power consumption of a mobile device, in accordance with one embodiment;
Figure **7B** is a flowchart of step of method for selectively loading elements into a window of an application, in accordance with one embodiment; and
Figure **8** illustrates an exemplary system in which the various architecture and/or functionality of the various previous embodiments may be implemented.

### DETAILED DESCRIPTION

Much effort has been expended designing techniques to reduce power consumption of electronic devices. Mobile devices particularly benefit from these efforts as reducing power consumption extends battery life, thereby enabling these devices to be used for longer amounts of time before requiring re-charging of the battery. Solutions for reducing power consumption may focus at least some of their attention on reducing the power consumption of a display device. The main energy consumers associated with a display device are the backlight, an active matrix of liquid crystals, and the processors tasked with generating pixel data for display on the device. For example, some LED backlight televisions have been designed with an array of LEDs positioned behind the array of liquid crystal elements so that the brightness of the backlight can be dimmed in areas of the screen associated with darker colors. Local area dimming can significantly reduce the power consumed by the display device. Other solutions for reducing power consumption may focus on reducing the power consumption of a processor or processors in the mobile device. Contemporary processors are designed with power-saving features that enable at least some of the processor components to be put in a low-power mode or shut off completely such as by power-gating various cores of a multi-core processor.

Other techniques can be employed to reduce the power consumed by a mobile device. Some examples of these techniques are dynamic frequency and voltage scaling (DFVS) for one or more processors of the mobile device, reducing resolution of rendered pixel data, throttling processing capacity dedicated to various operations, and so forth. However, these techniques typically have an adverse effect on the operation of the device. For example, the frequency of the clock of a processor may need to be reduced in order to reduce the operating voltage of the processor. A user may notice significant delays when performing certain operations under these conditions. As another example, reducing the brightness of the display device or the resolution of the images presented on the display device can have an adverse effect on image quality when compared to normal operation. A consumer may not accept this reduction in performance in order to extend the battery life of the device. However, the consumer may be able to tolerate the reduction in performance at certain times, such as when the battery is nearly drained.

One technique for extending the battery life of a mobile device can be achieved by selectively loading content viewed in a web browser. Selectively loading content may refer to downloading, rendering, and displaying elements of a markup language document in a configurable, prioritized order in which content is loaded in a different order from the default order of a rendering engine of the web browser, or even prevented from being loaded at all. Content providers typically design websites to have a certain look or style. A website may feature a navigation bar at the top of each markup language document that enables a user to navigate through the different pages of the website. The navigation bar may include images and menu choices that are common to multiple pages of the website. Each page may include different content, such as a section of text and/or images. Each page may also include embedded videos, advertising content, social media elements, and the like. Typically, a user that views a particular page of the website is really interested in a small portion of the elements included within the markup language document. For example, a new site may have a main page that includes the titles for a number of articles, possibly associated with an image from the article. When a user clicks on a particular title for an article, the web browsing application fetches a markup language document for that article. The markup language document may include text for the article, images or video related to the article, links to other articles that the user may be interested in, advertising content such as banner ads or embedded video, the navigation bar, and a footer that includes contact information, privacy policy, copyright notices, etc. Typically, the user is mostly focused on the text of the article, but may also be interested in the accompanying images. The user may not be as interested in the advertising content, the footer information, or the navigation bar, or other various content that may be included in the markup language document. Given that the markup language document is a text formatted file, the web browsing application must first parse the markup language document and then request separately any other content referenced within the markup language document (e.g., image files or video files). If this information is not of interest to the user, then the power expended by the mobile device to request, process, and display such data is wasted energy. Therefore, in various embodiments, a power-saving technique is to delay the loading of undesirable content unless explicitly requested by the user or for a predetermined amount of time. While this mode of operation can change the user experience of a website, the implementation of this technique may enable sufficient user control such that the user can tailor their desired user experience.

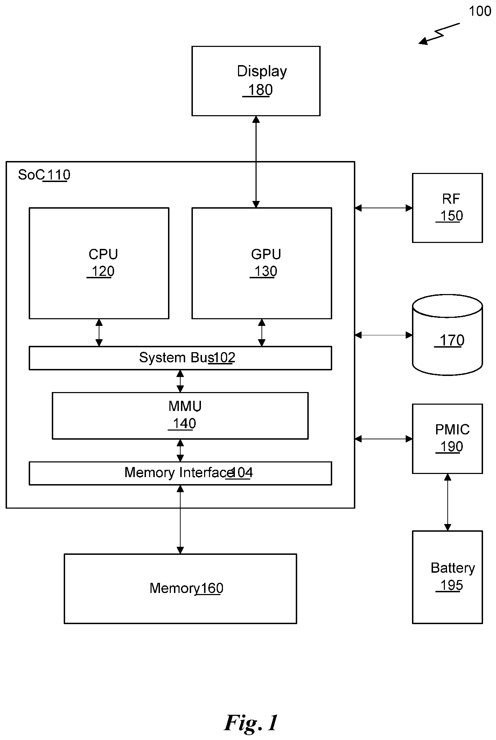

Figure **1** illustrates a mobile device **100,** in accordance with one embodiment. The mobile device **100** may be a smart phone or tablet computer or other type of electronic device including a battery as the primary source of power. As shown in Figure **1****,** the mobile device **100** includes a system-on-chip (SoC) **110** coupled to a memory **160** and a display device **180.** The SoC **110** is a processor implemented on an integrated circuit. The memory **160** is a volatile storage such as synchronous dynamic random access memory (SDRAM). An operating system, applications, and/or data may be stored in the memory **160** during operation. In one embodiment, the SoC **110** may be included with one or more discrete memory ICs in a package on package (PoP) configuration.

The display device **180** may be a liquid crystal display (LCD), organic light emitting diode (OLED), active matrix OLED (AMOLED), or the like. In one embodiment, the display device **180** implements touch functionality such as by including capacitive touch sensing technology integrated into a layer of the display device **180.** In some embodiments, such as LCD displays, the display device **180** may also include a backlight and backlight controller. The backlight may be one or more LEDs configured to generate a diffuse white light that is transmitted through a layer of liquid crystal elements. The backlight controller may be implemented as logic within an IC for controlling the operation of the LEDs. The backlight may be adjusted via the backlight controller to control a brightness of the display device **180.**

In one embodiment, the SoC **110** includes at least one CPU **120,** at least one GPU **130,** a system bus **102,** a memory management unit (MMU) **140,** and a memory interface **104.** The CPU **120** is a general purpose processor having one or more cores. In one embodiment, the CPU **120** is a RISC (reduced instruction set computer) processor core such as an ARM^{®} Coretex processor. The GPU **130** is a parallel processing unit including of one or more cores configured to process graphics or other data in a parallelizable manner. The GPU **130** may be implemented with a SIMD (single instruction, multiple data) architecture. In one embodiment, the GPU **130** includes one or more ARM^{®} Mali GPU cores.

The memory **160** is coupled to the memory interface **104** such that instructions and data can be loaded into on-chip memory within the CPU **120** and/or GPU **130.** The MMU **140** manages memory access requests generated by one or more components of the SoC **110.** The MMU **140** may also translate virtual addresses associated with the memory access requests into physical addresses associated with locations in the memory **160.**

The mobile device **100** is also coupled to a radio frequency transceiver **150,** a non-volatile storage device **170,** and a power management integrated circuit (PMIC) **190.** The radio frequency transceiver **150** may include at least one antenna and logic for encoding or decoding signals transmitted from or received by the mobile device **100.** For example, the mobile device **100** may include a radio for transmitting cellular signals on one or more cellular frequency bands. Alternatively, the RF transceiver **150** may be configured to transmit signals over Wi-Fi (e.g., within the 2.4 GHz or 5 GHz bands). The non-volatile storage device **170** may be a hard disk drive (HDD), solid state drive (SSD), flash memory such as an EEPROM or Compact Flash (CF) Card, and the like. The non-volatile storage device **170** may store the operating system, applications, and/or data that can be loaded into the memory **160** during normal operation.

The PMIC **190** is configured to perform power management operations of the mobile device **100.** In one embodiment, the PMIC **190** converts the DC power supply from a battery **195** to a supply voltage provided to the SoC **110.** The PMIC **190** may also be configured to implement dynamic voltage and frequency scaling (DVFS) by adjusting a level of the supply voltage provided to the SoC **110** and/or a frequency of the clock domain utilized by the SoC **110.** The PMIC **190** may also be configured to manage charging of the battery **195** when the mobile device is plugged into an external power source. In some embodiments, the PMIC **190** is integrated into the SoC **110** rather than being included as a separate IC within the mobile device **100.**

It will be appreciated that the mobile device **100** shown in Figure **1** is only one exemplary embodiment of a mobile device. In different embodiments, the mobile device **100** may include separate and distinct CPU and/or GPU ICs rather than the SoC **110.** In other embodiments, the mobile device **100** may include other types of components in addition to or in lieu of the components shown in Figure **1****.** For example, the mobile device **100** may include a microphone and/or speakers coupled to I/O ports of the SoC **110.**

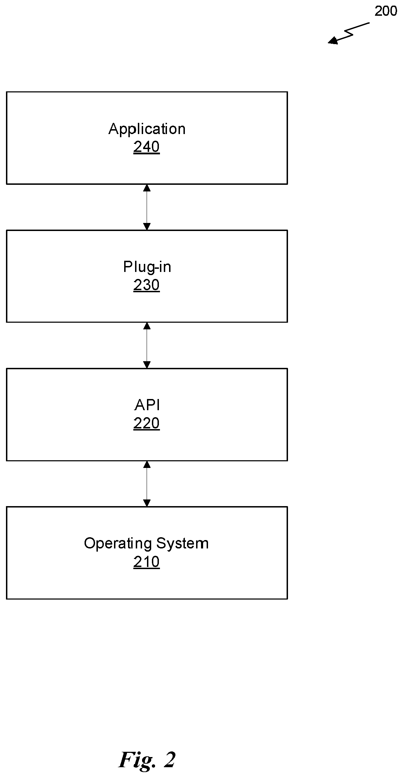

Figure **2** illustrates a software environment **200** of the mobile device **100,** in accordance with one embodiment. The mobile device **100** may be configured to load an operating system **210** into the memory **160.** The operating system **210** is executed by the CPU **120.** The operating system **210** manages various hardware interfaces of the mobile device **100** and enables applications to be executed using the CPU **120** and/or GPU **130.** The operating system **210** may include an operating system kernel, which is the set of instructions that define the core of the operating system. The kernel may establish data structures in the memory **160** that enable multiple processes to be managed by the operating system concurrently. The kernel may also implement functions for power management, scheduling, and the operation of various hardware resources. The operating system **210** may also include device drivers that implement various functions associated with components of the mobile device **100.** For example, a device driver may be installed for a GPU **130** that enables the CPU **120** to offload various operations to the GPU **130.** A device driver may also be installed for the display device **180,** RF transceiver **150,** non-volatile storage **170,** network interface controller (NIC), input devices such as a keyboard, mouse, touchpad or touchscreen, and the like.

In one embodiment, the operating system **210** divides a virtual address space into a kernel space and a user space. The kernel space is a range of virtual addresses that are allocated to the operating system kernel and related processes, and the user space is a range of virtual addresses that are allocated to normal processes. In other words, certain programs, such as the operating system kernel and certified device drivers, may be executed in the kernel space while other applications are executed in the user space. Processes executing in user space may not be allowed to access memory in the kernel space, which prevents these processes from crashing the system and accessing hardware resources directly. However, certain processes running in kernel space may implement an application programming interface (API) that can be called from processes running in user space, such that certain low-level functions can be accessed by processes running in user space in a safe manner.

An application **240** is stored in the memory **160** and may be executed by the CPU **120** within the software environment **200.** In one embodiment, the application **240** is a web browser. A plug-in **230** may be provided that adds certain functionality within the application **240.** In one embodiment, the plug-in **230** is a program that enables the selective loading of rendered content corresponding to elements of a markup language document to change a user experience of the application **240.** The plug-in **230** may be stored in the non-volatile storage **170** of the mobile device **100** and loaded into the memory **160** when a user opts to run the application **240.** The plug-in **230** is configured to parse a markup language document requested by the application **240,** assign each element in the markup language document a priority value based on a set of rules, and selectively load rendered content corresponding to the elements into a window of the application **240** based on the priority value assigned to each element.

In yet another embodiment, the plug-in **230** is configured to detect advertising content included in a markup language document. Advertising content may take the form of text, images, embedded videos, and hyperlinks that redirect a user to a commercial website. The plug-in may be configured to operate the mobile device **100** in a low-power mode when advertising content is loaded into a window of the application **240.** The low-power mode may include reducing a supply voltage or a frequency of a processor in the mobile device **100** using Dynamic Voltage and Frequency Scaling (DVFS), reducing a resolution of the rendered content corresponding to an advertising element, reducing a brightness level of the display device, throttling one or more threads associated with advertising elements, or masking (i.e., hiding) advertising elements within the window of the application. The low-power mode may be implemented by the plug-in **230** by making one or more calls to an API of a device driver for the PMIC **190,** the display device **180,** or by making system calls to the operating system.

In another embodiment, the plug-in **230** is configured to detect when video content is loaded into a window of the application **240.** When the video content is detected, the plug-in **230** may determine if the video content is associated with any advertising content. Advertising content may include one or more frames of video contained within the video content, or played prior to or directly after the video content. For example, a commercial may refer to a 30-second clip embedded within the video content that includes images related to a product or service that may not be associated with the main subject matter included in the video content. The advertising content may then be defined as the one or more commercials (e.g., sequences of frames) contained in the video content. The advertising content may also include elements not directly contained within the video content. For example, advertising content may refer to text, sponsored links, images, embedded video, and/or other elements displayed alongside the video content within the window of the application **240.**

If the plug-in **230** determines that the video content is associated with advertising content, then the plug-in **230** may cause the mobile device **100** to be operated in a different mode of operation during playback of the video content. In one embodiment, the plug-in **230** may utilize an application programming interface (API) **220** that enables the plug-in **230** to change the operating mode of the mobile device **100** between a low-power mode and a normal mode. In one embodiment, the API **220** is implemented within the context of a driver for the PMIC **190.** The API **220** may include a set of functions that can be called by the plug-in **230** operating in the user space. The functions may cause the operating system **210** to transmit signals to the PMIC **190** that cause the PMIC **190** to adjust the voltage supplied to the SoC **110** and/or adjust a frequency of the clock domains for the SoC **110.** The driver may be executed in a kernel space such that the API **220** provides a bridge between the plug-in **230** operating in the user space and the PMIC **190,** which is controlled by the driver. In another embodiment, the API **220** is implemented within the context of a driver for the display device **180.** The API **220** may include a set of functions for adjusting the brightness of a backlight of the display device **180.** The plug-in **230** can control the brightness of the backlight by calling a corresponding function of the API **220.** In yet another embodiment, the API **220** is implemented within the context of a driver for the GPU **130.** The API **220** may enable the plug-in **230** to specify a resolution of images rendered to the display device **180.** For example, the API **220** may include a function that lets the plug-in **230** configure a resolution of a frame buffer that is specified as a render target for pixel data generated from the video content. Thus, the video content may be rendered at a particular resolution as specified by the plug-in **230.** It will be appreciated that, in some embodiments, more than one API may be implemented within the context of multiple drivers associated with the operating system **210** in order to enable different functionality to be utilized by the plug-in **230** executing in the user space. In other embodiments, the operating system kernel itself may implement an API, through defined system calls, that enable different functionality to be utilized by the plug-in **230** executing in the user space.

In one embodiment, the API **220** enables the plug-in **230** to switch the mobile device **100** into a low-power mode. The low-power mode may include any steps to save power by, for example, a combination of DVFS, reduction in brightness of the display device, and reduction in resolution of rendered images for display. The plug-in **230** may switch the mobile device **100** into the low-power mode when advertising content is displayed during playback of the video content.

It will be appreciated that, in some embodiments, the application **240** and plug-in **230** may be implemented as a single application. For example, the functionality of the plug-in **230** may be implemented within a stand-alone web browser. In such embodiments, the plug-in **230** is not a separate extension of a base application such as a web-browser.

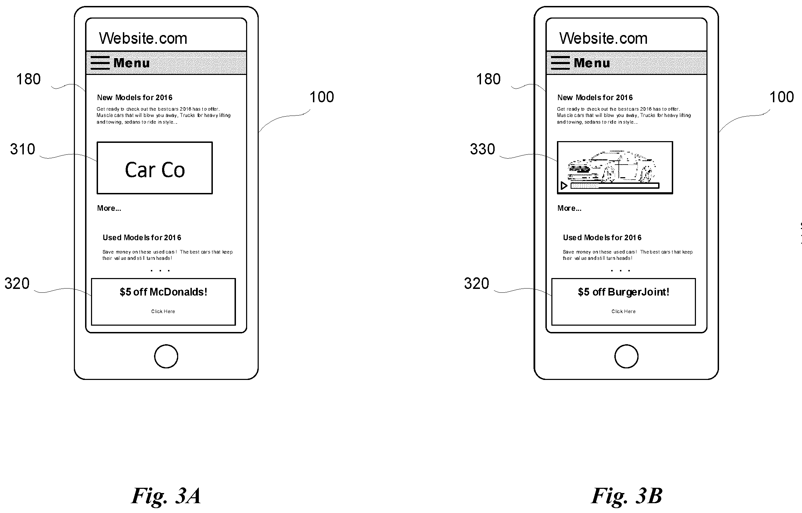

Figures **3A** through **3C** illustrate websites displayed by a mobile device **100,** in accordance with one embodiment. In one embodiment, the application **240** may be a web browser configured to read a markup language document (e.g., HTML document, XML document, etc.) that includes a plurality of elements. For example, HTML documents may include, but are not limited to, division elements, table elements, paragraph elements that specify text, image elements that specify a source location of an image file, and video elements that specify a source location of a video file.

A mobile device **100** includes a display device **180** that executes a web browser application **240.** The web browser application **240** is configured to retrieve a markup language document by sending a request to a server for a document specified by a particular uniform resource locator (URL). The application **240** is configured to receive the markup language document from the server and parse the markup language document such that each element in the markup language document can be rendered to a window shown on the display device **180.** The rendered content may include, but is not limited to a header, a navigation bar, text, image content, video content, and hyperlinks. As shown in Figure **3A****,** the rendered content includes image content **310** and image content **320** as well as text content, a header, and navigation bar. Image content **310** may be an image related to the main subject of the markup language document. In contrast, image content **320** may be an image related to advertising content. For example, while the element in the markup language document associated with image content **310** specifies a particular image file located on the same server as the markup language document, the element in the markup language document associated with image content **320** may specify an image located on a server known to serve advertising content to webpages using an application programming interface (API). The API may provide embedded code to include in an element of the markup language document and an associated script. When the markup language document is loaded by the application **240,** the script calls a server in order to retrieve the source location of the image data to display in the webpage. Thus, the image may be changed dynamically each time the webpage is loaded by the application **240.**

In one embodiment, the plug-in **230** is configured to distinguish between normal image content **310** and advertising image content **320.** The plug-in **230** may assign priority values to different elements in the markup language document in order to designate a loading order of the elements. The plug-in **230** may assign the image content **320** a lower priority than the image content **310** such that the image content **310** is loaded prior to the image content **320.** In one embodiment, a lower priority corresponds to a higher priority value and a higher priority corresponds to a lower priority value. For example, the highest priority may be associated with a priority value of 1 and the lowest priority may be associated with a priority value of 9, providing priority values in the range of [1, 9]. As will be discussed in more detail below, the plug-in **230** may utilize a set of rules to assign a priority value to each element in the markup language document. The set of rules may include at least one rule that assigns a priority value to a particular element based on a classification of the particular element. The classification may be based on the element type (i.e., which HTML tag is used to define the element) or attributes assigned to the element (e.g., such as a class or id attribute value assigned to the element). The set of rules may also include at least one rule that assigns a priority value to a particular element based on whether the particular element is identified as advertising content. Thus, based on the set of rules, image content **310** may be assigned a different priority value than image content **320.**

In one embodiment, elements associated with priority values in a first range of priority values are loaded into a window of the application **240** while operating the mobile device **100** in a normal mode and elements associated with priority values in a second range of priority values are loaded into the window of the application **240** while operating the mobile device **100** in a low-power mode. For example, a threshold value may be set to 5 such that elements having a priority value less than (or equal to) the threshold value are loaded into the window while operating the mobile device **100** in a normal mode, and elements having a priority value greater than (or equal to) the threshold value are loaded into the window while operating the mobile device **100** in a low-power mode. In the case of image content **320,** having a low priority and a priority value of 9, the image content **320** may be rendered at a lower resolution than image content **310,** image content **310** having a higher priority and a priority value of 3. The low-power mode can also consist of throttling threads associated with elements of lower priority (i.e., high priority values) and masking lower priority elements within the window of the application **240.**

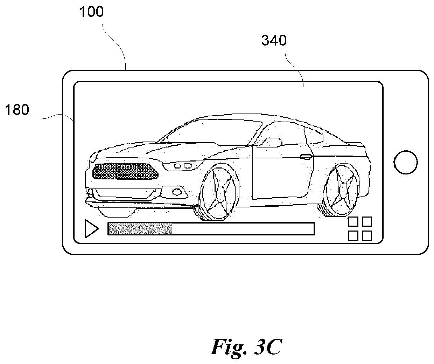

As shown in Figure **3B****,** the webpage may also include video content **330.** The video content may be embedded within the web page. The video content **330** may be configured to begin playback automatically or when prompted by a user, such as when a user clicks in the extents (i.e., boundaries of the element, as rendered in a window of the application) of the video content **330.** Alternatively, as shown in Figure **3C****,** the video content **330** may be configured to be played back in a full-screen mode. In one embodiment, the plug-in **230** may be configured to switch the mobile device **100** between the low-power mode and the normal mode during playback of video content **330.** The mobile device **100** may be operated in the normal mode when playback of the video content **330** is initiated and switched to the low-power mode whenever advertising content is detected, such as when the playback of the video content **330** reaches a particular frame in the sequence of frames identified as advertising content. During the playback of advertising content, the mobile device **100** may be operated in the low-power mode, such as by reducing a supply voltage or a frequency of a processor (e.g., SoC **110**) in the mobile device **100** using Dynamic Voltage and Frequency Scaling (DVFS) as implemented by the PMIC **190,** reducing a resolution of the rendered frames of the advertising content; and reducing a brightness level of the display device **180** of the mobile device **100.** Techniques for identifying or detecting advertising content in the video content **330,** and switching the mobile device **100** into a low-power mode during video playback are described in more detail in U.S. Patent Application No. [FUWEP054] ("Content-Aware Energy Savings for Video Streaming and Playback on Mobile Devices") filed on February xx, 2017, the entire contents of which are incorporated herein by reference.

It will be appreciated that the operating mode of the mobile device **100** may be changed from normal mode to low-power mode based on the priority assigned to different elements of a markup language document and a time and order at which rendered content corresponding to those elements is generated and loaded into a window of the application **240.** Such operation may reduce power consumption of the mobile device **100** by various means when undesirable content is processed, rendered, and loaded into a window of the application. In addition, by controlling the order of loading of the elements based on the priority assigned each element, loading of such unwanted elements may be avoided entirely if the user cancels the operation by navigating to another markup language document before the time at which those elements would be loaded into the window of the application **240.**

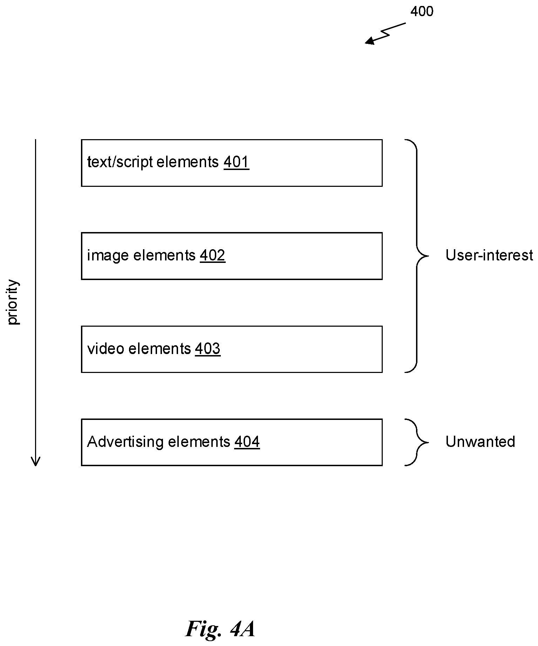

Figure **4A** illustrates a priority assigned to elements of a markup language document **400,** in accordance with one embodiment. Markup language document **400** is a text file that includes a plurality of elements arranged in a hierarchy. The markup language document **400** may be, e.g., an hypertext markup language (HTML) document, an extensible markup language document (XML), or some other type of markup language document. In one embodiment, the markup language document is a text document conforming to the HTML5 standard and includes a plurality of HTML elements, such as the HTML element (<html>), the body element (<body>), the division element (<div>), the image element (<img>), and so forth.

In one embodiment, the plug-in **230** is configured to intercept all markup language documents received from a server as part of a request transmitted to the server from the application **240.** The plug-in **230** receives the markup language document **400** and parses the markup language document in order to determine which types of elements are included in the markup language document **400.** For example, according to the HTML5 standard, each element in the markup language document **400** is identified by at least one tag. A tag is a sequence of characters that indicates the type of element included in the markup language document **400.** Tags are identified as being enclosed in a pair of angle brackets (i.e., '<' and `>') and are of the form <*element* [*attributes*]>*.* Some elements may include an opening tag at the beginning of the element and a corresponding closing tag at the end of the element. A closing tag is of the form </*element*>*.* Consequently, each '<' symbol in the markup language document **400** indicates the beginning of an opening tag or a closing tag of an element in the markup language document **400.**

It will be appreciated that elements are nested within the markup language document **400.** For example, the HTML5 standard defines a Document Object Model (DOM) that specifies a hierarchy of elements within an HTML document. A root element, the HTML element (<html>) contains all the elements of the HTML document. Inside the HTML element, other elements such as the header element (<head>), the body element (<body>), the footer element (<foot>), the division element (<div>), the paragraph element (<p>), and many others will be nested within the root HTML element.

The plug-in **230** is configured to parse the markup language document and assign a priority value to each element in the markup language document according to a set of rules. In one embodiment, the set of rules correlates each type or classification of element in the markup language document with a particular priority value. For example, text/script elements **401** may be assigned a priority value of 1. These elements may include, but are not limited to, the paragraph element <p>, the heading elements (e.g., <h1>, <h2>, <h3>, etc.), the quotation and citation elements (e.g., <q>, <blockquote>, <address>, etc.), and the like. In general, all text/script elements **401** may be assigned a default priority value of 1. This top level priority is assigned to elements that will be loaded into a window of the application prior to other elements of lower priority. Consequently, only elements of lower priority will be subject to a selective loading scheme that delays the presentation of those elements.

As shown in Figure **4A****,** the set of rules may assign lower priority to particular sets of elements. For example, image elements **402** may be assigned a priority value of 2, video elements **403** may be assigned a priority value of 3, and advertisement elements **404** may be assigned a priority value of 4. Elements of priority 1-3 are associated with elements of potential user interest and elements of priority 4 are associated with elements of unwanted interest. It will be appreciated that the number of priority levels and the order of the priority value of different elements may be defined within the set of rules. Thus, whenever the plug-in **230** parses an image element <img> the plug-in **230** may assign that element a priority value of 2.

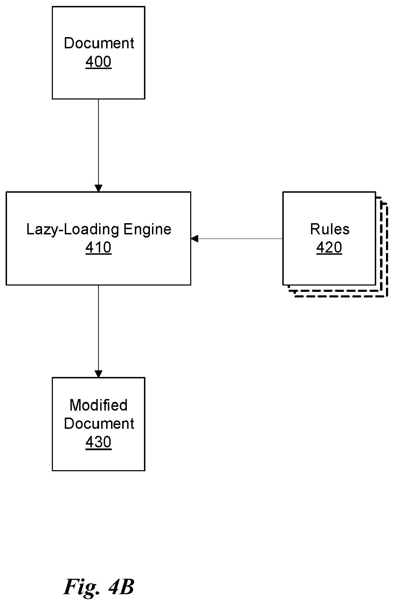

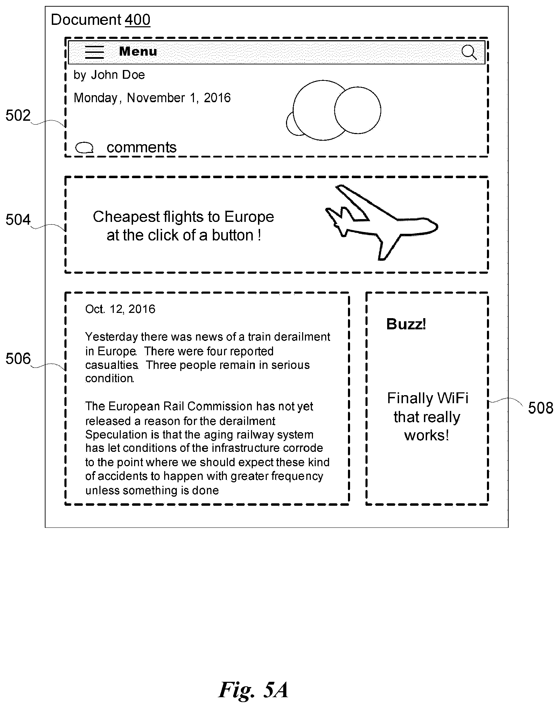

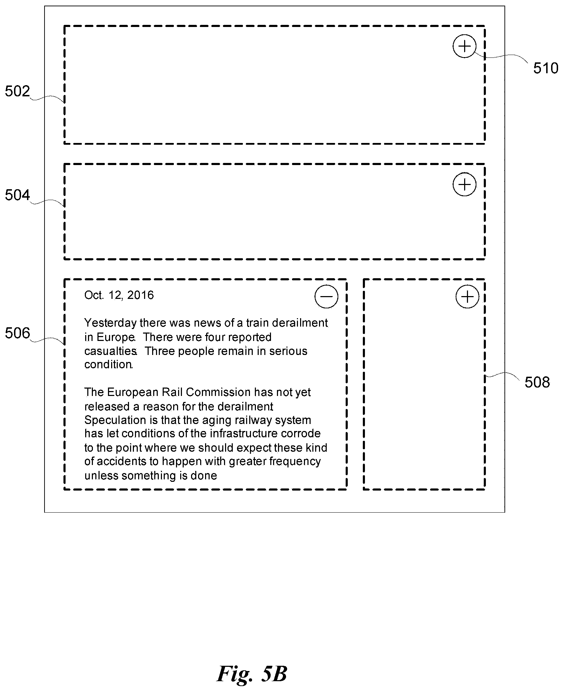

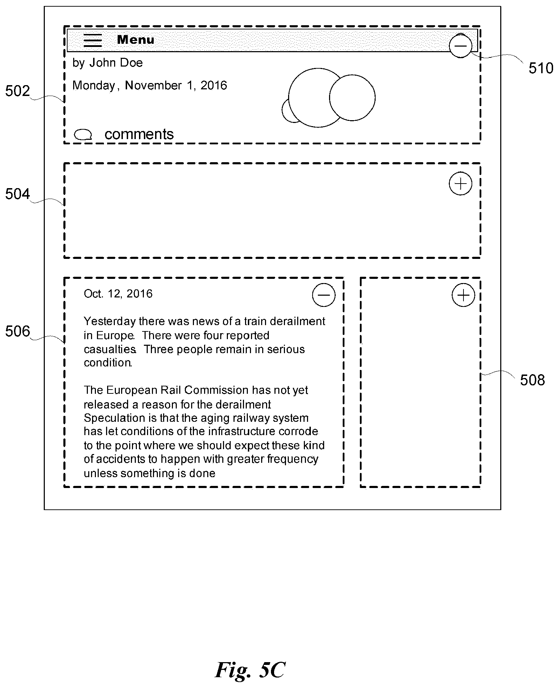

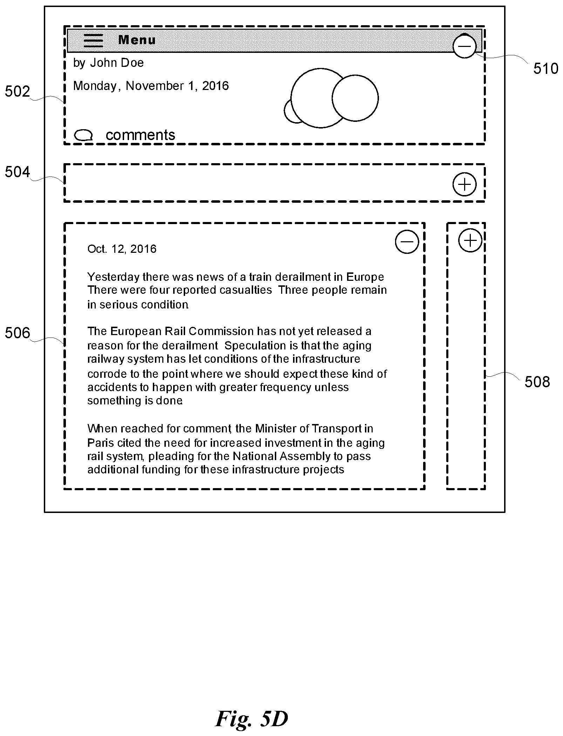

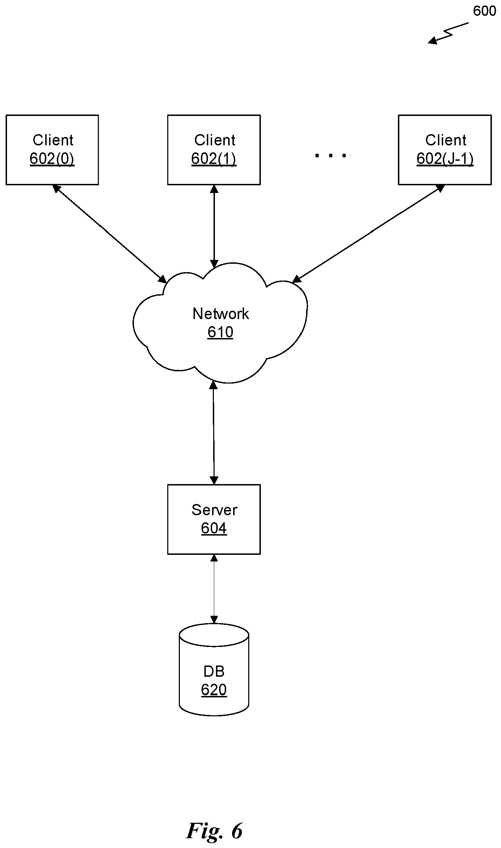

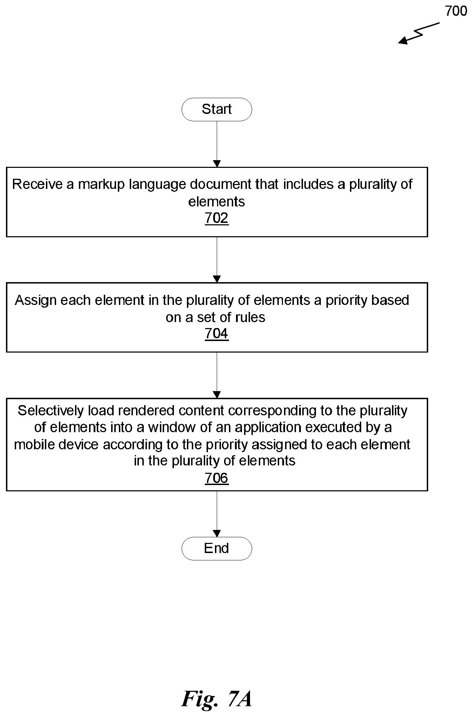

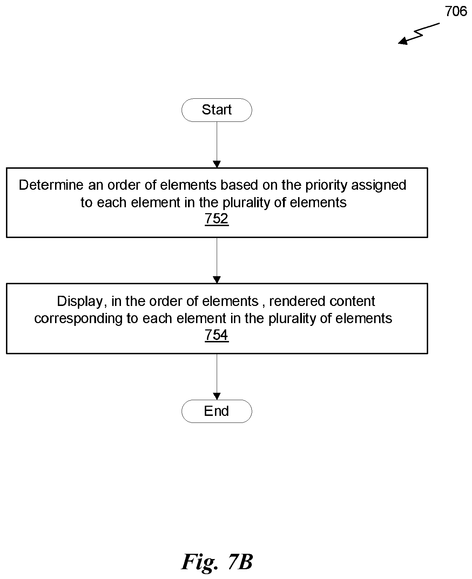

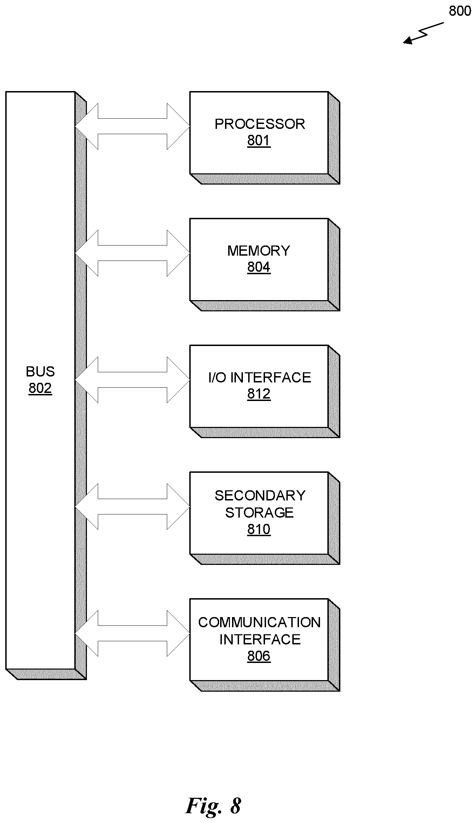

In one embodiment, nested elements are assigned a minimum priority value assigned to their parent. For example, a header element <head> is typically used to denote that elements within the header element are part of a header in the markup language document **400.** The header may include images, text, hyperlinks (e.g., <a>), block elements (e.g., <div>, <span>), table elements (e.g.., <table>, <tr>, <th>), and so forth. Some of these elements may be associated with a rule that assigns these elements a priority value of 1. However, if the parent element of an element is associated with a rule that assigns the parent element a priority value higher than 1, then the elements contained within the parent element are assigned a minimum priority value equal to the priority value assigned to the parent element. Consequently, all elements within the header may be assigned a priority value of at least 2 if the header element is associated with a rule that assigns the header element a priority value of 2. Given the hierarchical nature of markup language documents, this scheme ensures that blocks of nested elements are assigned a minimum priority value equal to or greater than their parent element.

In another embodiment, elements of the same type may be assigned different priority values. In other words, elements associated with a particular tag, but different attributes may be assigned different priorities. Global attributes such as *class* or *id* may be used to differentiate elements with different priorities. For example, division elements may be associated with a rule that division elements are assigned a priority value of 1. However, division elements of a particular class may be assigned a different priority value. As a more specific example, a particular markup language document may include a division element of class "menu" (i.e., <div class="menu">). One rule in the set of rules may assign all division elements a default priority value of 1, but any division elements of the menu class may be assigned a priority value of 2.

In some embodiments, the rules may include more complex rules than simply assigning priority values based on the element type or attribute. In one embodiment, the rules may assign priority values to certain elements based on the hierarchical structure of the elements. For example, a priority value of 1 may be assigned to any image elements nested in a division element (<div>) but a priority value of 2 may be assigned to any image elements nested in a table element (<table>). In another embodiment, the rules may assign priority values based on the content of the element. For example, image elements may be assigned different priority values based on the size of the image. Smaller images (e.g., images less than 100 pixels by 100 pixels) may be assigned a priority value of 1 whereas larger images (e.g., images greater than or equal to 100 pixels by 100 pixels) may be assigned a priority value of 2. In this case, smaller images will be fetched from a server, rendered, and loaded before larger images. In another case, a rule may examine any URL included as an attribute to an element. For example, an advertisement element may be defined as a script element that has a source attribute (src) set to a specific value that specifies a known advertisement javascript code. Alternatively, an advertisement element may be defined as a script element that includes specific segments of source javascript code between the opening tag and closing tag of the script element. For example, the plug-in **230** may parse the text between any corresponding pair of opening tag and closing tag for a script element to look for the following code: "adsbyadcompany = window.adsbyadcompany", which would indicate that the script element represents advertising content. It will be appreciated that some advertising content may be identified as other types of elements, such as an image element nested in a hyperlink element that links to a known advertising redirect URL.

Figure **4B** illustrates a system for generating a modified markup language document based on a set of rules, in accordance with one embodiment. As shown in Figure **4B****,** the system includes a lazy-loading engine **410,** which may be implemented as a module of the plug-in **230.** The lazy-loading engine **410** is a software module that receives a markup language document **400** as input and generates a modified markup language document **430** as output based on a set of rules. The lazy-loading engine **410** enables the elements of the markup language document **400** to be retrieved and rendered in a particular order. The selection of the order of the elements may result in more efficient power consumption of the mobile device **100,** thereby increasing the battery life of the mobile device **100.**

In one embodiment, the plug-in **230** parses the markup language document **400** and assigns a priority value to each element in the markup language document **400** based on a set of rules **420.** Then, the lazy-loading engine **410** is configured to generate a modified markup language document **430** based on the priority values assigned to the plurality of elements in the markup language document **400.** In order to implement selective loading of the elements, the lazy-loading engine **410** may generate a modified markup language document **430** that is a copy of the markup language document **400** with any element having a priority value greater than or equal to a particular threshold value having been omitted from the modified markup language document **430.** The modified markup language document **430** is transmitted to the application **240** and the modified markup language document **430** is processed by the application **240** to generate rendered content (i.e., image data for display) displayed in a window of the application **240.** The lazy-loading engine **410** may then increase the threshold value and generate a new modified markup language document **430** that is a copy of the markup language document **400** with any element having a priority value greater than or equal to the increased threshold value having been omitted from the new modified markup language document **430.** The new modified markup language document **430** is then transmitted to the application **240** after a predetermined delay time, and the new modified markup language document **430** is processed by the application **240** to generate rendered content displayed in the window of the application **240.** In other words, the modified markup language document **430** displayed in the window is updated after the predetermined delay time. This process is repeated a number of times, increasing the threshold value each time, until the new modified markup language document **430** is the same as the markup language document **400** because the threshold value is greater than the priority value assigned to every element in the markup language document **400.**

It will be appreciated that simply transmitting a new modified markup language document **430** to the application **240** repeatedly may cause the entire document to be re-rendered a number of times, which may waste energy and be distracting to a user. Thus, in one embodiment, the plug-in **230** is configured to simply update the elements displayed in the window of the application **240** using the document object model (DOM) to change the content of a container element in order to add the newly visible elements (i.e., any elements associated with a priority value equal to the threshold value). Thus, new rendered content may simply be displayed in the window of the application **240** rather than rendering the entire contents of the modified markup language document **430** multiple times.

In another embodiment, the lazy-loading engine **410** modifies the markup language document **400** to generate a new modified markup language document **430** by inserting new elements into the markup language document. For example, the modified markup language document **430** may include new division elements added to the markup language document **400** as well as corresponding javascript code. In one embodiment, each element associated with a different priority than that element's parent element may be included in a container division element that includes a class attribute set to a particular class name that indicates the priority level of the child element. The modified markup language document **430** may then include appended javascript code that sets each element above the top priority as hidden. The javascript code may also include a javascript timing event that triggers a new function to increment a threshold value and then show any elements having a class name that match the priority level equal to the new threshold value. The timing event can be reset a number of times to trigger new elements to be shown with each increment of the threshold value. The timing event may be triggered after a predetermined delay time has elapsed since the previous timing event. In this technique, the lazy-loading engine **410** only generates one modified markup language document **430** and the operation of selective loading of rendered content is simply controlled by the native interpretation of javascript code by the application **240.**

Figures **5A** through **5D** illustrate selective loading of rendered content for a plurality of elements in a markup language document **400,** in accordance with one embodiment. A markup language document **400** includes a number of elements that are rendered in various locations of the window **500.** The window **500** may comprise pixel data rendered to at least a portion of the visible extents of the display device **180,** and the window **500** may correspond to at least one instance of the application **240** executed by a processor **120** of the mobile device **100.**

As shown in Figure **5A****,** a first portion **502** of the window **500** may include a number of elements of the markup language document **400.** For example, the markup language document **400** may include a first division element that contains a plurality of elements corresponding to a navigation bar, text elements, images, hyperlinks and the like. The first division element, and all child elements contained within the first division element, may be rendered in the first portion **502** of the window **500.** Similarly, a second division element, and all child elements contained within the second division element, may be rendered in a second portion **504** of the window **500;** a third division element, and all child elements contained within the third division element, may be rendered in a third portion **506** of the window **500;** and a fourth division element, and all child elements contained within the fourth division element, may be rendered in a fourth portion **508** of the window **500.** It will be appreciated that the third division element and the fourth division element may be nested in a fifth division element that spans the width of the window **500.**

The first portion **502** of the window **500** contains elements that are related to the subject matter of the website, and likely of interest to a user, but that may not be of high priority to the user. Instead, a user that requested the markup language document **400** may be primarily interested in the article included in the third portion **506** of the window **500.** When the markup language document **400** is loaded into the window **500,** the user may immediately scroll down to read the article contained in the third portion **506** of the window **500.** Consequently, loading the content in the second portion **504** of the window **500** and the fourth portion **508** of the window **500,** content that is apparently advertising content/unwanted content, may delay the user from consuming the content that the user desires. Therefore, it would be beneficial to load the content of the third portion **506** of the window **500** prior to loading the content from the other portions of the window **500.**

As shown in Figure **5B****,** elements in the first portion **502,** second portion **504,** and fourth portion **508** of the window **500** have been hidden while the elements in the third portion **506** of the window **500** are shown when the modified markup language document **430** is initially loaded into the window **500.** Again, the plug-in **230** is configured to modify the markup language document **400** to generate the modified markup language document **430** to selectively load rendered content for certain elements into the window **500.** Content associated with hidden elements is not rendered by the application **240,** thereby reducing the processing load on the processor **120** and/or GPU **130** of the mobile device **100.** Furthermore, where the hidden elements are associated with additional source data, such as with multimedia elements (e.g., image elements <img>, video elements <video>, audio elements <audio>, and the like), the plug-in **230** may delay fetching the source data from the server until such time as the element associated with the source data is to be loaded into the window **500.** For example, the second portion **504** of the window **500** may include an image element contained within a hyperlink element that implements a banner advertisement. The image element specifies a location of a source image file that stores the pixel data for the image. The plug-in **230** may delay requesting the source image file from the server until such time as the second portion **504** of the window **500** is displayed. Such time may be equal to one or more predetermined delay times based on the priority value associated with the image element.

In one embodiment, selectively loading rendered content corresponding to the plurality of elements is performed manually. More specifically, the modified markup language document **430** is loaded into the window **500** as shown in Figure **5B****.** However, the modified markup language document **430** includes additional elements configured to control the visibility of different portions of the window **500.** For example, the modified markup language document **430** may include a child division element that is overlaid (e.g., using a position property of the child element) over the parent division element corresponding to each portion of the window **500.** Each child division element contains a graphical user interface (GUI) element **510** (i.e., plus or minus symbol) that is configured to control the visibility of the corresponding parent division element and any child elements of the parent division element in that portion of the window **500.** The parent division element and any child elements in the parent division element may be referred to as corresponding elements of the GUI element **510.** The modified markup language document **430** may also include javascript code that reacts to a click event (i.e., "onclick") anywhere within the GUI element **510.** The javascript code can toggle the visibility of the portion of the window **500** associated with that GUI element **510.**

As shown in Figure **5C****,** clicking on the GUI element **510** may change the visibility of the parent element and all child elements contained in the first portion **502** of the window **500.** As discussed above, selective loading of rendered content corresponding to each element assigned a priority value above the threshold value is performed in response to user input provided via the new overlaid GUI elements **510.** In another embodiment, selective loading of the rendered content corresponding to each element assigned a priority value above the threshold value may combine both manual and automatic techniques, loading rendered content automatically based on predetermined timing events that incrementally increase the threshold value used to determine visibility of particular elements and user input received via the GUI elements **510.** Thus, even if relatively long predetermined delay times are utilized, a user will be able to override loading priorities by using the GUI elements **510** to load particular elements immediately.

As shown in Figures **5B** and **5C****,** the layout of the elements does not change whether the elements are hidden or visible. In other words, a container that includes hidden elements may have the same size as the size of the container as it would be rendered if the elements were visible. The relative position of elements in the window **500** will not change when new elements become visible. However, reserving so much space within the window **500** may look awkward when viewed by a user and the user is more apt to react negatively to missing content. Therefore, in another embodiment, the plug-in **230** may modify the layout of particular elements that are hidden based on the priority value assigned to those elements. As shown in Figure **5D****,** the second portion **504** and the fourth portion **508** of the window **500** are much smaller relative to the first portion **502** and third portion **508** of the window **500.** This may be achieved by changing the size of a parent division element associated with each portion of the window **500.** In one embodiment, hiding all elements within a particular portion of the window **500** may cause that portion of the window **500** to disappear altogether. Instead a parent division element and the GUI element **510** for that portion of the window **500** remain visible even when all other child elements for that portion of the window **500** are hidden. The size of the container division element may then be adjusted to some minimum width or minimum height such that the GUI element **510** is located in a portion of the window **500** that is smaller than the portion of the window **500** when the child elements in that portion of the window **500** are made visible. Javascript code may be used to toggle the size of the parent division element when the GUI element **510** is clicked or when a timing event is triggered to change the visibility of the elements in that portion of the window **500.**

Figure **6** illustrates a system **600** for serving sets of rules to multiple clients, in accordance with one embodiment. As shown in Figure 6, *J* client nodes **602** are coupled to a server node **604** via a network **610.** In one embodiment, the network **610** is the Internet and the nodes communicate via the TCP/IP protocol. Each client node **602** may be a mobile device **100,** which includes the plug-in **230** and application **240.**

In one embodiment, one set of rules may be defined that controls the visibility of every markup language document processed by the plug-in **230.** The single set of rules may be configured by each user in order to tailor the operation of the plug-in **230** to their particular tastes in user experience. However, with such a vast array of different markup language documents available on the Internet, a single set of rules is bound to lead to disparate results. Consequently, in another embodiment, a centralized server node **604** maintains a database **620** that stores different sets of rules for different markup language documents. When a user enters a URL for a particular markup language document in the application **240,** the plug-in **230** may request a set of rules corresponding to that URL from the server **604.** The server **604** may query the database **620** for a set of rules that corresponds to that URL and transmit the set of rules to the plug-in **230** such that selective loading for that particular markup language document will follow a specific set of rules. It will be appreciated that, in some embodiments, the server **604** is a distributed system that is implemented redundantly across multiple servers **604** located in different data centers to ensure high availability and high reliability of the rules service provided by the servers **604.** In such embodiments, the database **620** may also be implemented as a distributed database with redundant copies of each set of rules.

In many websites, different markup language documents may be implemented using substantially the same layout but substituting different content in some elements of the markup language document. For example, news websites may generate markup language documents for each article on the website that use substantially identical layouts with different text content for the article and different image and video content corresponding to the particular article included in each markup language document. The URLs for each of these markup language documents may start with an identical root portion of the URL and end with different sub-paths and/or file names. In other websites, markup language documents are generated dynamically using server side code. These documents may be generated based on the URL using content retrieved from one or more databases coupled to the server side code. Such dynamically generated markup language documents may be associated with a single set of rules corresponding to a root portion of the URL used to generate the markup language document. In other words, one set of rules may be utilized to assign priority values to similar markup language documents that share a common layout or design, where the similarity is identified based on a root portion of the URL.

The root portion of the URL refers to the domain name without a path or the domain name combined with a first portion of the path for the markup language document. For example, a website with a domain name of "www.genericwebsite.com" may include a number of markup language documents that define the different web pages included in the website. This domain name leads to a main index page (i.e., markup language document) for the website. However, the website itself may include different discussion forums. Each discussion forum is associated with a main page located at a particular path on the www.genericwebsite.com domain. For example, a news discussion forum is located at "www.genericwebsite.com/news", which corresponds to a path of "/news[/index.html]" (the brackets are used to denote a default filename for a markup language document for a path that does not end in a filename). The main page of each discussion forum contains a list of user-generated discussion threads, each discussion thread may include a hyperlink to some other resource located on the internet along with a hyperlink to a comment chain related to that discussion thread. The comment chain is associated with a URL in the form of "www.genericwebsite.com/news/comments/...", where the ellipsis represents a specific sub-path based on the particular discussion thread. The markup language document for each comment chain associated with the news discussion forum has a similar layout. Therefore, one set of rules may be stored that corresponds to any markup language document having a root portion of the URL matching "www.genericwebsite.com/news/comments/" such that any markup language document for a comment chain in the news discussion forum will be processed according to a uniform set of rules. However, other sets of rules may be defined for other discussion forums (e.g., /movies, or /jokes). Thus, popular websites may have custom rules defined for different paths of a single domain to tailor the priority assigned to different elements across different markup language documents of a single website.

It will be appreciated that many websites are designed like the website described above, where the path is provided as an input to server side code for generating dynamic webpages based on a backend database. Typically, the structure of the path will determine the structural layout of the markup language document such that similar URLs will result in similar markup language documents generated by a common server side code. This uniformity can be exploited by tailoring the set of rules to load webpages in a custom order that is different from the default order determined by the application **240** when parsing a markup language document.

By changing the order that elements are loaded and displayed in the window **500** of an application **240,** the plug-in **230** may reduce the power consumption of the mobile device **100.** For example, a user may load a particular markup language document **400** by clicking on a hyperlink in a web browser. The plug-in **230** may delay the loading of certain elements in the markup language document **400** by a predetermined delay time. If the user views some high priority elements and decides that the markup language document does not have the information the user wanted to view, then the user may navigate to another markup language document before some elements have been loaded into the window **500.** In some cases, data will not have been retrieved from a server by the time a user navigates to another markup language document. Network bandwidth is reduced, saving power by not using the radio to send and receive data, data for images or video is not stored in the memory, the processor is not tasked with decoding encrypted image data such as JPEG format image files or MPEG format video files, the display is not refreshed with bright images in large portions of the screen, and so forth. Significant power savings may be realized just by selectively loading content in a custom order, and delaying the loading of certain content by a predetermined time or by user input in order to prevent unnecessary power consumption associated with the processing of unwanted content.

Figure **7A** is a flowchart of a method **700** for reducing the power consumption of a mobile device **100,** in accordance with one embodiment. At step **702,** a markup language document **400** that includes a plurality of elements is received. In one embodiment, a plug-in **230** for an application **240** intercepts the markup language document **400** transmitted from a server to an application **240.**

At step **704,** each element in the plurality of elements is assigned a priority value based on a set of rules. The set of rules includes at least two rules configured to assign two or more priority values to at least two subsets of elements in the plurality of elements In one embodiment, the plug-in **230** parses the markup language document **400** and generates a modified markup language document **430** based on the set of rules. Each element in the markup language document is assigned a priority value and various elements or javascript code may be added to the modified markup language document **430.**

At step **706,** rendered content corresponding to the plurality of elements is selectively loaded into a window **500** of an application **240** executed by the mobile device **100** according to the priority values assigned to each element in the plurality of elements. In one embodiment, the modified markup language document **430** is transmitted to the application **240** and loaded per the implementation of a rendering engine of the application **240.** Modifications in the elements of the modified markup language document **430** may change the order and time that certain elements are loaded by the application **240** compared to the order and time that corresponding elements in markup language document **400** would be loaded by the application **240.** In another embodiment, the plug-in **230** transmits multiple markup language documents to the application **240** at different times in order to load different elements of the markup language document **400** in a particular order.

Figure **7B** is a flowchart of step **706** of method **700** for selectively loading elements into a window of an application **240,** in accordance with one embodiment. At step **752,** an order of elements in the modified markup language document is determined based on the priority value assigned to each element in the plurality of elements. In one embodiment, the order of elements is determined by the application **240** using a hierarchy of elements in the modified markup language document **430** as well as a visibility of each element. Timing events and/or user input may trigger the increase of a threshold value and javascript code may toggle the visibility of each element in the plurality of elements based on a comparison of the priority value for that element with the threshold value. If the priority value for an element is less than or equal to the threshold value, then the element is visible. However, if the priority value for an element is greater than the threshold value, then the element is hidden.

At step **754,** rendered content corresponding to each element in the plurality of elements is displayed in the order of elements. In one embodiment, the threshold value is set to the lowest priority value (e.g., 1). Rendered content for all high priority elements (i.e., elements having a priority value equal to 1) in the modified markup language document is generated and displayed in the window **500** of the application **240.** The threshold value may be incremented (e.g., by the expiration of a timing event), which changes the visibility of elements that have a priority value less than or equal to the new threshold value. Rendered content for these elements is then generated, by the application **240,** and displayed in the window **500** of the application **240.** By incrementing the threshold value and displaying rendered content for newly visible elements each time the threshold value is increased, the rendered content corresponding to each element in the plurality of elements is displayed in the order of elements as defined by an increasing order of priority values.

Figure **8** illustrates an exemplary system **800** in which the various architecture and/or functionality of the various previous embodiments may be implemented. As shown, a system **800** is provided including at least one processor **801** that is connected to a communication bus **802.** The communication bus **802** may be implemented using any suitable protocol, such as PCI (Peripheral Component Interconnect), PCI-Express, AGP (Accelerated Graphics Port), HyperTransport, or any other bus or point-to-point communication protocol(s). The system **800** also includes a memory **804.** Control logic (software) and data are stored in the memory **804** which may take the form of random access memory (RAM).

The system **800** also includes an input/output (I/O) interface **812** and a communication interface **806.** User input may be received from the input devices **812,** e.g., keyboard, mouse, touchpad, microphone, and the like. In one embodiment, the communication interface **806** may be coupled to a graphics processor (not shown) that includes a plurality of shader modules, a rasterization module, etc. Each of the foregoing modules may even be situated on a single semiconductor platform to form a graphics processing unit (GPU).

In the present description, a single semiconductor platform may refer to a sole unitary semiconductor-based integrated circuit or chip. It should be noted that the term single semiconductor platform may also refer to multi-chip modules with increased connectivity which simulate on-chip operation, and make substantial improvements over utilizing a conventional central processing unit (CPU) and bus implementation. Of course, the various modules may also be situated separately or in various combinations of semiconductor platforms per the desires of the user.

The system **800** may also include a secondary storage **810.** The secondary storage **810** includes, for example, a hard disk drive and/or a removable storage drive, representing a floppy disk drive, a magnetic tape drive, a compact disk drive, digital versatile disk (DVD) drive, recording device, universal serial bus (USB) flash memory. The removable storage drive reads from and/or writes to a removable storage unit in a well-known manner.

Computer programs, or computer control logic algorithms, may be stored in the memory **804** and/or the secondary storage **810.** Such computer programs, when executed, enable the system **800** to perform various functions. The memory **804,** the storage **810,** and/or any other storage are possible examples of computer-readable media.

In one embodiment, the architecture and/or functionality of the various previous figures may be implemented in the context of the processor **801,** a graphics processor coupled to communication interface **806,** an integrated circuit (not shown) that is capable of at least a portion of the capabilities of both the processor **801** and a graphics processor, a chipset (i.e., a group of integrated circuits designed to work and sold as a unit for performing related functions, etc.), and/or any other integrated circuit for that matter.

Still yet, the architecture and/or functionality of the various previous figures may be implemented in the context of a general computer system, a circuit board system, a game console system dedicated for entertainment purposes, an application-specific system, and/or any other desired system. For example, the system **800** may take the form of a desktop computer, laptop computer, server, workstation, game consoles, embedded system, and/or any other type of logic. Still yet, the system **800** may take the form of various other devices including, but not limited to a personal digital assistant (PDA) device, a mobile phone device, a television, etc.

Further, while not shown, the system **800** may be coupled to a network (e.g., a telecommunications network, local area network (LAN), wireless network, wide area network (WAN) such as the Internet, peer-to-peer network, cable network, or the like) for communication purposes.

In an example embodiment, the system **800** includes a document reception module receiving a markup language document that includes a plurality of elements, a priority assignment module assigning each element in the plurality of elements a priority value based on a set of rules, wherein the set of rules includes at least two rules configured to assign two or more priority values to at least two subsets of elements in the plurality of elements, and a rendered content loading module selectively loading rendered content corresponding to the plurality of elements into a window of an application executed by the mobile device according to the priority value assigned to each element in the plurality of elements. In some embodiments, the system **800** may include other or additional modules for performing any one of or combination of steps described in the embodiments. Further, any of the additional or alternative embodiments or aspects of the method, as shown in any of the figures or recited in any of the claims, are also contemplated to include similar modules.

Further embodiments of the present invention are provided in the following. It should be noted that the numbering used in the following section does not necessarily need to comply with the numbering used in the previous sections.

Embodiment 1. A computer-implemented method for web browsing on a mobile device, comprising: receiving a markup language document that includes a plurality of elements; assigning each element in the plurality of elements a priority value based on a set of rules, wherein the set of rules includes at least two rules configured to assign two or more priority values to at least two subsets of elements in the plurality of elements; and selectively loading rendered content corresponding to the plurality of elements into a window of an application executed by the mobile device according to the priority value assigned to each element in the plurality of elements.

Embodiment 1. The method of embodiment 1, wherein the set of rules includes at least one rule that assigns the priority value to a particular element based on a classification of the particular element.

Embodiment 2. The method of any of embodiments 1 to 2, wherein the set of rules includes at least one rule that assigns the priority value to a particular element based on whether the particular element is identified as advertising content.

Embodiment 4. The method of any of embodiments 1 to 3, wherein selectively loading rendered content corresponding to the plurality of elements into the window of the application comprises: determining an order of elements based on the priority value assigned to each element in the plurality of elements; and displaying, in the order of elements, rendered content corresponding to each element in the plurality of elements, wherein the display of a next element in the order of elements is delayed for a predetermined delay time after displaying a previous element in the order of elements.

Embodiment 5. The method of any of embodiments 1 to 4, wherein elements associated with priority values in a first range of priority values are loaded into the window while operating the mobile device in a normal mode and elements associated with priority values in a second range of priority values are loaded into the window while operating the mobile device in a low-power mode.

Embodiment 6. The method of embodiment 5, wherein operating the mobile device in the low-power mode comprises at least one of reducing a supply voltage or a frequency of a processor in the mobile device using Dynamic Voltage and Frequency Scaling , DVFS, reducing a resolution of the rendered content corresponding to the element, reducing a brightness level of the display device, throttling one or more threads associated with low priority elements within the markup language document, or masking low priority elements within the window of the application.

Embodiment 7. The method of any of embodiments 1 to 6, wherein one or more elements in the plurality of elements is associated with a graphical user interface element displayed in the window of the application that enables a user to manually load the rendered content associated with corresponding elements into the window of the application.

Embodiment 8. A mobile device for web browsing, comprising: a non-transitory memory storage comprising instructions; and one or more processors in communication with the memory, wherein the one or more processors execute the instructions to: receive a markup language document that includes a plurality of elements; assign each element in the plurality of elements a priority value based on a set of rules, wherein the set of rules includes at least two rules configured to assign two or more priority values to at least two subsets of elements in the plurality of elements; and selectively load rendered content corresponding to the plurality of elements into a window of an application executed by the mobile device according to the priority value assigned to each element in the plurality of elements.

Embodiment 9. The mobile device of embodiment 8, wherein the set of rules includes at least one rule that assigns the priority value to a particular element based on a classification of the particular element.

Embodiment 10. The mobile device of any of embodiments 8 to 9, wherein the set of rules includes at least one rule that assigns the priority value to a particular element based on whether the particular element is identified as advertising content.

Embodiment 11. The mobile device of any of embodiments 8 to 10, wherein the set of rules is selected based on an address corresponding to the markup language document.

Embodiment 12. The mobile device of any of embodiments 8 to 11, wherein selectively loading rendered content corresponding to the plurality of elements into the window of the application comprises: determining an order of elements based on the priority value assigned to each element in the plurality of elements; and displaying, in the order of elements, rendered content corresponding to each element in the plurality of elements, wherein the display of a next element in the order of elements is delayed for a predetermined delay time after displaying a previous element in the order of elements.

Embodiment 13. The mobile device of any of embodiments 8 to 12, wherein elements associated with priority values in a first range of priority values are loaded into the window while operating the mobile device in a normal mode and elements associated with priority values in a second range of priority values are loaded into the window while operating the mobile device in a low-power mode.

Embodiment 14. The mobile device of embodiment 13, wherein operating the mobile device in the low-power mode comprises at least one of reducing a supply voltage or a frequency of a processor in the mobile device using Dynamic Voltage and Frequency Scaling , DVFS, reducing a resolution of the rendered content corresponding to the element, reducing a brightness level of the display device, throttling one or more threads associated with low priority elements within the markup language document, or masking low priority elements within the window of the application.

Embodiment 15. The mobile device of any of embodiments 8 to 14, wherein one or more elements in the plurality of elements is associated with a graphical user interface element displayed in the window of the application that enables a user to manually load the rendered content associated with corresponding elements into the window of the application.

It is noted that the techniques described herein, in an aspect, are embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media are included which may store data that is accessible by a computer, such as magnetic cassettes, flash memory cards, digital video disks, Bernoulli cartridges, random access memory (RAM), read-only memory (ROM), and the like.

As used here, a "computer-readable medium" includes one or more of any suitable media for storing the executable instructions of a computer program such that the instruction execution machine, system, apparatus, or device may read (or fetch) the instructions from the computer readable medium and execute the instructions for carrying out the described methods. Suitable storage formats include one or more of an electronic, magnetic, optical, and electromagnetic format. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD^{™}), a BLU-RAY disc; and the like.

It should be understood that the arrangement of components illustrated in the Figures described are exemplary and that other arrangements are possible. It should also be understood that the various system components (and means) defined by the embodiments, described below, and illustrated in the various block diagrams represent logical components in some systems configured according to the subject matter disclosed herein.

For example, one or more of these system components (and means) may be realized, in whole or in part, by at least some of the components illustrated in the arrangements illustrated in the described Figures. In addition, while at least one of these components are implemented at least partially as an electronic hardware component, and therefore constitutes a machine, the other components may be implemented in software that when included in an execution environment constitutes a machine, hardware, or a combination of software and hardware.

More particularly, at least one component defined by the embodiments is implemented at least partially as an electronic hardware component, such as an instruction execution machine (e.g., a processor-based or processor-containing machine) and/or as specialized circuits or circuitry (e.g., discreet logic gates interconnected to perform a specialized function). Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the description above, the subject matter is described with reference to acts and symbolic representations of operations that are performed by one or more devices, unless indicated otherwise. As such, it will be understood that such acts and operations, which are at times referred to as being computer-executed, include the manipulation by the processor of data in a structured form. This manipulation transforms the data or maintains it at locations in the memory system of the computer, which reconfigures or otherwise alters the operation of the device in a manner well understood by those skilled in the art. The data is maintained at physical locations of the memory as data structures that have particular properties defined by the format of the data. However, while the subject matter is being described in the foregoing context, it is not meant to be limiting as those of skill in the art will appreciate that various acts and operations described hereinafter may also be implemented in hardware.

The computer-readable non-transitory media includes all types of computer-readable media, including magnetic storage media, optical storage media, and solid state storage media and specifically excludes signals. It should be understood that the software can be installed in and sold with the mobile device. Alternatively, the software can be obtained and loaded into the mobile device, including obtaining the software via a disc medium or from any manner of network or distribution system, including, for example, from a server owned by the software creator or from a server not owned but used by the software creator. The software can be stored on a server for distribution over the Internet, for example.

To facilitate an understanding of the subject matter described herein, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

The embodiments described herein include the one or more modes known to the inventor for carrying out the claimed subject matter. It is to be appreciated that variations of those embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A web browsing method, comprising:
receiving a markup language document that includes a plurality of elements, wherein the plurality of elements corresponds to a priority value based on a set of rules, wherein the set of rules includes at least two rules configured to assign two or more priority values to at least two subsets of elements in the plurality of elements; and
displaying, in the order of elements, rendered content corresponding to each element in the plurality of elements, wherein the display of a next element in the order of elements is delayed for a delay time after displaying a previous element in the order of elements, wherein the priority value assigned to the plurality of elements is related to the order of elements.

2. The method of claim 1, wherein the set of rules includes at least one rule that assigns the priority value to an element based on a classification of the element.

3. The method of any of claims 1 to 2, wherein the set of rules includes at least one rule that assigns the priority value to a particular element based on whether the particular element is identified as advertising content.

4. The method of any of claims 1 to 3, wherein the set of rules is selected based on a uniform resource locator, URL corresponding to the markup language document.

5. The method of any of claims 1 to 4, wherein elements associated with priority values in a first range of priority values are loaded into the window while operating the mobile device in a normal mode or elements associated with priority values in a second range of priority values are loaded into the window while operating the mobile device in a low-power mode.

6. The method of claim 5, wherein operating the mobile device in the low-power mode comprises at least one of reducing a supply voltage or a frequency of a processor in the mobile device using Dynamic Voltage and Frequency Scaling, DVFS, reducing a resolution of the rendered content corresponding to the element, reducing a brightness level of the display device, throttling one or more threads associated with low priority elements within the markup language document, or masking low priority elements within the window of the application.

7. A mobile device for web browsing, comprising:
a non-transitory memory storage comprising instructions; and
one or more processors in communication with the memory, wherein the one or more processors execute the instructions to:
receiving a markup language document that includes a plurality of elements, wherein the plurality of elements corresponds to a priority value based on a set of rules, wherein the set of rules includes at least two rules configured to assign two or more priority values to at least two subsets of elements in the plurality of elements; and
displaying, in the order of elements, rendered content corresponding to each element in the plurality of elements, wherein the display of a next element in the order of elements is delayed for a delay time after displaying a previous element in the order of elements, wherein the priority value assigned to the plurality of elements is related to the order of elements.

8. The mobile device of claim 7, wherein the set of rules includes at least one rule that assigns the priority value to a particular element based on a classification of the particular element.

9. The mobile device of any of claims 7 to 8, wherein the set of rules includes at least one rule that assigns the priority value to a particular element based on whether the particular element is identified as advertising content.

10. The mobile device of any of claims 7 to 9, wherein elements associated with priority values in a first range of priority values are loaded into the window while operating the mobile device in a normal mode or elements associated with priority values in a second range of priority values are loaded into the window while operating the mobile device in a low-power mode.

11. The mobile device of claim 10, wherein operating the mobile device in the low-power mode comprises at least one of reducing a supply voltage or a frequency of a processor in the mobile device using Dynamic Voltage and Frequency Scaling, DVFS, reducing a resolution of the rendered content corresponding to the element, reducing a brightness level of the display device, throttling one or more threads associated with low priority elements within the markup language document, or masking low priority elements within the window of the application.

12. A computer-readable media storing computer instructions for web browsing that, when executed by one or more processors, cause the one or more processors to perform the method according to any of the preceding claims 1 to 6.

13. A computer product comprising instructions which, when executed by a computer, cause the computer to carry out the method according to any one of claims 1 to 6.
